# EUROPEAN PATENT APPLICATION

(11) **EP 4 366 377 A1**
(43) Date of publication of application: **08.05.2024**
(21) Application number: 22831785.5
(22) Date of filing: 21.06.2022
(51) Int. Cl.: H04W 36/00

(54) **CELL INDICATION METHOD AND APPARATUS, CELL SWITCHING METHOD AND APPARATUS, AND SERVICE NODE, TERMINAL AND MEDIUM**

(30) Priority: 02.07.2021 CN 202110751051
(71) Applicant: ZTE Corporation, Shenzhen, Guangdong 518057 (CN)
(72) Inventor: XU, Wanfu, Shenzhen, Guangdong 518057 (CN); XIE, Feng, Shenzhen, Guangdong 518057 (CN); LI, Jie, Shenzhen, Guangdong 518057 (CN)
(74) Representative: Savi, Massimiliano
(86) International application number: PCT/CN2022/100211
(87) International publication number: WO 2023/273967

(57) **Abstract**

Provided in the present application are a cell indication method and apparatus, a cell switching method and apparatus, and a service node, a terminal and a medium. The cell indication method comprises: generating downlink control information, wherein the downlink control information is used for indicating information of a target cell (110); and sending the downlink control information to a terminal (120).

## Description

### CROSS-REFERENCE TO RELATED APPLICATION

The present disclosure is filed on the basis of Chinese patent application No. 202110751051.8 filed July 02, 2021, and claims priority to the Chinese patent application, the entire contents of which are incorporated herein by reference.

### TECHNICAL FIELD

The present disclosure relates to the field of wireless communication technologies, and more particularly, to a cell indication method and apparatus, a cell handover method and apparatus, a serving node, a terminal device, and a medium.

### BACKGROUND

New Radio (NR) defines three Radio Resource Control (RRC) modes of a terminal device: an RRC_IDLE mode, an RRC_INACTIVE mode, and an RRC_CONNECTED mode. Mobility management of a terminal device in the RRC_CONNECTED mode includes management of handovers between cells and management of handovers between beams within cells. A handover between cells is controlled by RRC signaling and depends on Radio Resource Management (RRM) and measurement.

Due to the unsatisfactory communication quality between the terminal device and the serving cell as well as the high overheads and long transmission time of RRC signaling during the cell handover, the terminal device cannot successfully receive the handover indication sent by the network side, leading to a long service interruption in the handover process or even a handover failure.

### SUMMARY

The present disclosure provides a cell indication method and apparatus, a cell handover method and apparatus, a serving node, a terminal device, and a medium to improve the reliability of indication and the success rate of cell handover.

An embodiment of the present disclosure provides a cell indication method, including: generating Downlink Control Information (DCI), where the DCI is used for indicating information of a target cell; and sending the DCI to a terminal device.

An embodiment of the present disclosure provides a cell handover method, including: receiving DCI, where the DCI is used for indicating information of a target cell; and performing a handover from a serving cell to the target cell according to the DCI.

An embodiment of the present disclosure provides a cell indication apparatus, including: a generating module, configured for generating DCI, where the DCI is used for indicating information of a target cell; and a sending module, configured for sending the DCI to a terminal device.

An embodiment of the present disclosure provides a cell handover apparatus, including: a receiving module, configured for receiving DCI, where the DCI is used for indicating information of a target cell; and a handover module, configured for performing a handover from a serving cell to the target cell according to the DCI.

An embodiment of the present disclosure further provides a serving node, including: a memory, a processor, and a computer program stored in the memory and executable by the processor, where the program, when executed by the processor, causes the processor to carry out the cell indication method described above.

An embodiment of the present disclosure provides a terminal device, including: a memory, a processor, and a computer program stored in the memory and executable by the processor, where the program, when executed by the processor, causes the processor to carry out the cell handover method described above.

An embodiment of the present disclosure provides a computer-readable storage medium, storing a computer program which, when executed by a processor, causes the processor to carry out the cell indication method or the cell handover method described above.

### BRIEF DESCRIPTION OF DRAWINGS

FIG. 1 is a flowchart of a cell indication method according to an embodiment;
FIG. 2 is a schematic diagram of a DCI format according to an embodiment;
FIG. 3 is a schematic diagram of another DCI format according to an embodiment;
FIG. 4 is a schematic diagram of still another DCI format according to an embodiment;
FIG. 5 is a flowchart of a cell handover method according to an embodiment;
FIG. 6 is a schematic structural diagram of a cell indication apparatus according to an embodiment;
FIG. 7 is a schematic structural diagram of a cell handover apparatus according to an embodiment;
FIG. 8 is a schematic structural diagram of hardware of a serving node according to an embodiment; and
FIG. 9 is a schematic structural diagram of hardware of a terminal device according to an embodiment.

### DETAILED DESCRIPTION

The present disclosure is further described below with reference to the accompanying drawings and embodiments. It should be understood that the specific embodiments described herein are merely used for illustrating the present disclosure, and are not intended to limit the present disclosure. The terms such as "first", "second" and the like mentioned in the embodiments are merely used for distinguishing different apparatus, modules, units or other objects, and are not intended to define the order or interdependence of functions performed by these apparatus, modules, units or other objects. It is to be noted that if not in collision, the embodiments and features therein in the present disclosure may be combined with each other. In addition, it should be noted that, for the convenience of description, the drawings only show some but not all the structures related to the present disclosure.

In the embodiments of the present disclosure, in view of the problems of high overheads, slow transmission, and low transmission success rate of RRC signaling, a cell indication method is provided. In the method, DCI is used to indicate, to a terminal device, a target cell to be handed over to, so as to improve the reliability of indication and the success rate of cell handover.

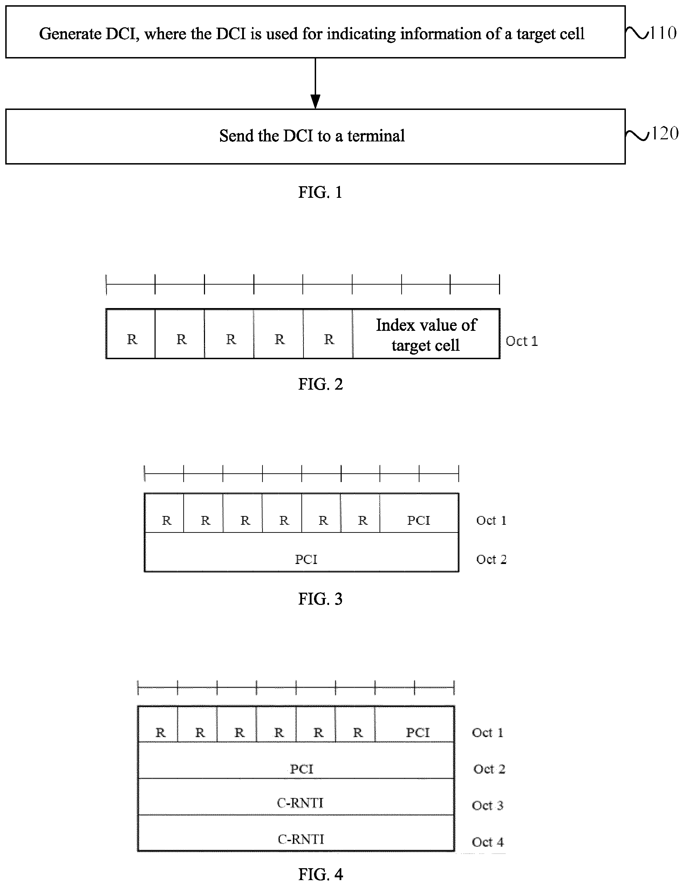

FIG. 1 is a flowchart of a cell indication method according to an embodiment. The method may be applied to a serving node, such as a base station, a network side node, a scheduling node, etc. As shown in FIG. 1, the method provided in this embodiment includes the following steps 110 to 120.

In a step of 110, DCI is generated, where the DCI is used for indicating information of a target cell.

In a step of 120, the DCI is sent to a terminal device.

In this embodiment, the serving node may determine communication quality between the terminal device and a serving cell currently connected to the terminal device according to a connection status, a channel status, a position relationship, and the like between the serving node and the terminal device, determine whether a serving cell handover may need to be performed for the terminal device, and determine a target cell that can continue to provide service for the terminal device after handover. Based on this, the serving node indicates the information of the target cell to the terminal device through the DCI, to instruct the terminal device to be handed over from the current serving cell to the target cell.

It should be noted that because the information of the target cell is indicated through the DCI, and the DCI features low signaling overheads, fast transmission, and high transmission success rate, the reliability of indication of the serving cell handover can be ensured. Based on this, the terminal device can be quickly handed over from the current serving cell to the target cell according to the DCI. In this way, the service interruption time is reduced and the success rate of handover is ensured.

In an embodiment, the DCI is generated according to measurement information reported by the terminal device.

In this embodiment, the terminal device may measure the channel status between the terminal device and the serving node and report measurement information to the serving node. The serving node determines the communication quality between the terminal device and the serving cell currently connected to the terminal device according to the measurement information, determines whether a serving cell handover may need to be performed, and determines the target cell that can continue to provide service for the terminal device after handover.

In an embodiment, the DCI includes at least one of
an RRC message; Media Access Control Control Element (MAC-CE) information; or Physical Downlink Control Channel (PDCCH) DCI.

In this embodiment, the DCI may be an RRC message; or may be information in MAC signaling, e.g., MAC CE information; or may be PDCCH DCI.

In an embodiment, the information of the target cell includes at least one of a Physical Cell Identifier (PCI) of the target cell; a Cell-Radio Network Temporary Identifier (C-RNTI) of the target cell; a target cell set; or an index of the target cell.

In this embodiment, a PCI, a C-RNTI, and an index of each cell are unique, and the serving node indicates one or more of the PCI, the C-RNTI, or the index of the target cell to the terminal device through the DCI, for the terminal device to determine a serving cell to which the terminal device is to be handed over. Such a handover indication mode is more flexible and efficient. In addition, the target cell may include a plurality of cells, the information of the target cell includes a target cell set, and the terminal device may be handed over to one of the target cells in the target cell set.

FIG. 2 is a schematic diagram of a DCI format according to an embodiment. Oct represents one byte, and one byte contains eight bits. As shown in FIG. 2, in Oct 1, five bits of "R" represent a reserved field, and the remaining bits may be used to indicate the index of the target cell, i.e., a field indicating the index of the target cell has a length of three bits. The target cell may be a Conditional Handover (CHO) cell, i.e., the terminal device can be handed over to the target cell only when a set condition is satisfied.

FIG. 3 is a schematic diagram of another DCI format according to an embodiment. As shown in FIG. 3, six bits in Oct 1 represent a reserved field, and the remaining bits in Oct 1 and bits in Oct 2 may be used to indicate the PCI of the target cell, i.e., the length of a PCI field is 10 bits. The PCI field may be PhysCellId specified in the 3rd Generation Partnership Project (3GPP) Technical Specification (TS) 38.331 and/or 3GPP TS 37.355.

FIG. 4 is a schematic diagram of still another DCI format according to an embodiment. As shown in FIG. 4, six bits in Oct 1 represent a reserved field, and the remaining bits in Oct 1 and bits in Oct 2 may be used to indicate the PCI of the target cell, i.e., the length of a PCI field is 10 bits. In addition, bits in Oct 3 and Oct 4 may be used to indicate the C-RNTI of the target cell, i.e., the length of a C-RNTI field is 16 bits. The C-RNTI field may contain a C-RNTI of a MAC entity.

In an embodiment, the PCI includes a PCI field value or a PCI index.

In this embodiment, the content of the PCI may be a specific PCI field value or a PCI index. If the content of the PCI is a specific PCI field value, the PCI indicated in the DCI is the physical cell identifier of the target cell, which can directly indicate the target cell. If the content of the PCI is a PCI index, there is a first mapping relationship between field values of the PCI and PCI indexes. The terminal device may query the first mapping relationship according to the PCI index indicated in the DCI to obtain the PCI field value corresponding to the PCI index, so as to determine the physical cell identifier of the target cell. In this case, the PCI index can indirectly indicate the target cell.

In an embodiment, the C-RNTI includes a C-RNTI field value or a C-RNTI index.

In this embodiment, the content of the C-RNTI may be a specific C-RNTI field value or a C-RNTI index. If the content of the C-RNTI is a specific C-RNTI field value, the C-RNTI indicated in the DCI is a temporary identifier of the target cell, which can directly indicate the target cell. If the content of the C-RNTI is a C-RNTI index, there is a second mapping relationship between field values of the C-RNTI and C-RNTI indexes. The terminal device may query the second mapping relationship according to the C-RNTI index indicated in the DCI to obtain the C-RNTI field value corresponding to the C-RNTI index, so as to determine the temporary identifier of the target cell. In this case, the C-RNTI index can indirectly indicate the target cell.

In an embodiment, the target cell set is sent through an RRC message or a MAC CE message; and the RRC message is an existing information element or a newly added information element.

In this embodiment, the information of the target cell includes a target cell set, and the DCI may be an RRC message or a MAC CE message. For the RRC message, an existing information element or a newly added information element may be used to indicate the target cell set. The existing information element is an information element that already exists and is used for transmitting other information. The newly added information element is an information element specially configured for indicating the target cell set.

In an embodiment, the PDCCH DCI is configured to have 1 bit, 2 bits, or 3 bits through higher layer, and is used for indicating the index of the target cell.

In this embodiment, the DCI is the PDCCH DCI used for indicating the index of the target cell, and the PDCCH DCI has a length of 1 bit, 2 bits, or 3 bits. The length of the PDCCH DCI may be configured through higher layer signaling or may be predefined.

In an embodiment, the serving node may further indicate a serving cell handover mode to the terminal device. The serving cell handover mode includes uplink-downlink handover and downlink handover. The uplink-downlink handover means that a serving cell providing uplink service for the terminal device (i.e., an uplink serving cell) and a serving cell providing downlink service for the terminal device (i.e., a downlink serving cell) are both switched to the target cell. The downlink handover means that within a specified time, the serving cell providing uplink service for the terminal device remains unchanged, and the serving cell providing downlink service for the terminal device is switched to the target cell, to preferentially ensure the uplink service quality. Through the indication of the different handover modes, the communication quality in the uplink and downlink directions are considered separately, making the service relationship and handover mode between the serving node and the terminal device more flexible, thereby meeting different requirements in practice.

In an embodiment of the present disclosure, a cell handover method is further provided. The method may be applied to a terminal device, e.g., a User Equipment (UE) such as a mobile phone, a tablet, a computer, etc. It should be noted that for technical details that are not described in detail in this embodiment, reference may be made to any of the above embodiments.

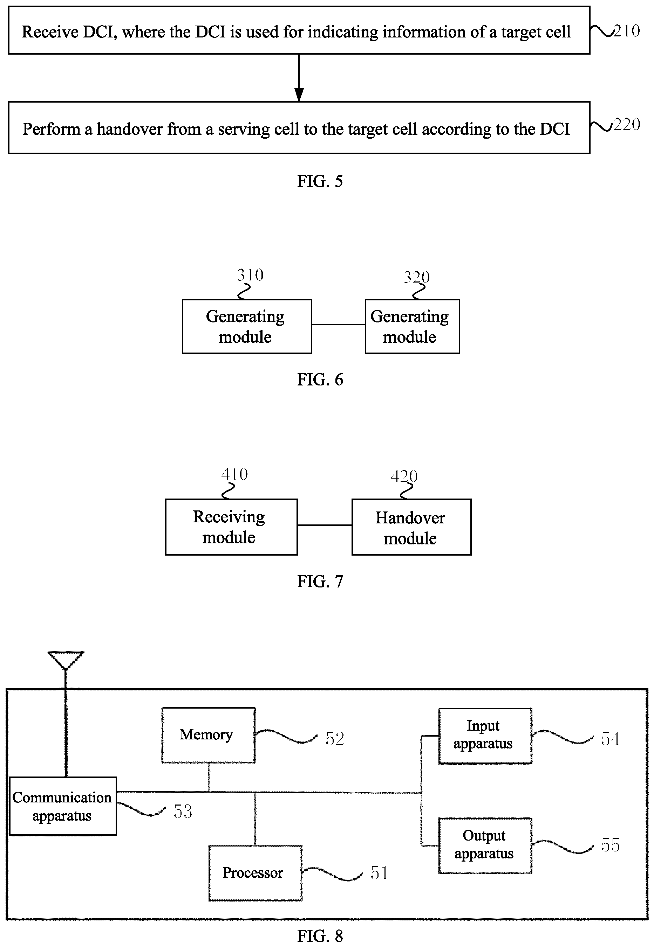

FIG. 5 is a flowchart of a cell handover method according to an embodiment. As shown in FIG. 5, the method provided in this embodiment includes the following steps 210 to 220.

In a step of 210, DCI is received, where the DCI is used for indicating information of a target cell.

In a step of 220, a handover from a serving cell to the target cell is performed according to the DCI.

In this embodiment, the terminal device performs a serving cell handover according to the indication of the DCI. Because the DCI features low signaling overheads, fast transmission, and high transmission success rate, the reliability of indication can be ensured. Based on this, the terminal device can be quickly handed over to the target cell according to the DCI. In this way, the service interruption time can be reduced and the success rate of handover can be ensured.

In an embodiment, the method further includes a step 200.

In the step 200, measurement information is reported, where the DCI is generated according to the measurement information.

In this embodiment, the terminal device may measure the channel status between the terminal device and the serving node and report measurement information to the serving node. The serving node determines whether a serving cell handover may need to be performed, and indicates the information of the target cell that can continue to provide service for the terminal device after handover.

In an embodiment, the DCI includes at least one of
an RRC message; MAC CE information; or PDCCH DCI.

In an embodiment, the information of the target cell includes at least one of
a PCI of the target cell; a C-RNTI of the target cell; a target cell set; or an index of the target cell.

In an embodiment, the PCI includes a PCI field value or a PCI index.

In an embodiment, the C-RNTI includes a C-RNTI field value or a C-RNTI index.

In an embodiment, the target cell set is sent through an RRC message or a MAC CE message; and the RRC message is an existing information element or a newly added information element.

In an embodiment, the PDCCH DCI is configured to have 1 bit, 2 bits, or 3 bits through higher layer, and is used for indicating the index of the target cell.

In an embodiment, the step 220 includes:
performing a handover from an uplink serving cell and a downlink serving cell to the target cell within a specified time according to the DCI; or
performing a handover from a downlink serving cell to the target cell within a specified time according to the DCI.

In this embodiment, the terminal device may determine a handover mode according to an indication from the serving node, or according to a pre-configuration, or autonomously, and implement the serving cell handover within the specified time. For example, both the uplink and downlink serving cells are switched to the target cell, or only the downlink serving cell is switched to the target cell, within the specified time. The specified time may be indicated by the serving node. The indication of the different handover modes makes the service relationship and handover mode between the serving node and the terminal device more flexible, thereby meeting different requirements in practice.

An embodiment of the present disclosure provides a cell indication apparatus. FIG. 6 is a schematic structural diagram of a cell indication apparatus according to an embodiment. As shown in FIG. 6, the cell indication apparatus includes:
a generating module 310, configured for generating DCI, where the DCI is used for indicating information of a target cell; and
a sending module 320, configured for sending the DCI to a terminal device.

According to the cell indication apparatus of this embodiment, the DCI is used to indicate, to the terminal device, the target cell to be handed over to. Because the DCI features low signaling overheads, fast transmission, and high transmission success rate, the reliability of indication can be ensured. Based on this, the terminal device can be quickly handed over to the target cell according to the DCI. In this way, the service interruption time can be reduced and the success rate of handover can be ensured.

In an embodiment, the DCI is generated according to the measurement information reported by the terminal device.

In an embodiment, the DCI includes at least one of
an RRC message; MAC CE information; or PDCCH DCI.

In an embodiment, the information of the target cell includes at least one of
a PCI of the target cell; a C-RNTI of the target cell; a target cell set; or an index of the target cell.

In an embodiment, the PCI includes a PCI field value or a PCI index.

In an embodiment, the C-RNTI includes a C-RNTI field value or a C-RNTI index.

In an embodiment, the target cell set is sent through an RRC message or a MAC CE message; and the RRC message is an existing information element or a newly added information element.

In an embodiment, the PDCCH DCI is configured to have 1 bit, 2 bits, or 3 bits through higher layer, and is used for indicating the index of the target cell.

The cell indication apparatus provided in this embodiment and the cell indication method provided in the above embodiments belong to the same inventive concept. For technical details that are not described in detail in this embodiment, reference may be made to any of the above embodiments. This embodiment has the same beneficial effects as those obtained by the execution of the cell indication method.

An embodiment of the present disclosure further provides a cell handover apparatus. FIG. 7 is a schematic structural diagram of a cell handover apparatus according to an embodiment. As shown in FIG. 7, the cell handover apparatus includes:
a receiving module 410, configured for receiving DCI, where the DCI is used for indicating information of a target cell; and
a handover module 420, configured for performing a handover from a serving cell to the target cell according to the DCI.

The cell handover apparatus of this embodiment performs a serving cell handover according to the indication of the DCI. Because the DCI features low signaling overheads, fast transmission, and high transmission success rate, the reliability of indication can be ensured. In addition, the cell handover apparatus of this embodiment can perform a quick handover from the serving cell to the target cell according to the DCI. In this way, the service interruption time can be reduced and the success rate of handover can be ensured.

In an embodiment, the apparatus further includes:
a reporting module 4, configured for reporting measurement information, where the DCI is generated according to the measurement information.

In an embodiment, the DCI includes at least one of
an RRC message; MAC CE information; or PDCCH DCI.

In an embodiment, the information of the target cell includes at least one of
a PCI of the target cell; a C-RNTI of the target cell; a target cell set; or an index of the target cell.

In an embodiment, the PCI includes a PCI field value or a PCI index.

In an embodiment, the C-RNTI includes a C-RNTI field value or a C-RNTI index.

In an embodiment, the target cell set is sent through an RRC message or a MAC CE message; and the RRC message is an existing information element or a newly added information element.

In an embodiment, the PDCCH DCI is configured to have 1 bit, 2 bits, or 3 bits through higher layer, and is used for indicating the index of the target cell.

In an embodiment, the handover module 420 is configured for:
performing a handover from an uplink serving cell and a downlink serving cell to the target cell within a specified time according to the DCI; or
performing a handover from a downlink serving cell to the target cell within a specified time according to the DCI.

The cell handover apparatus provided in this embodiment and the cell handover method provided in the above embodiments belong to the same inventive concept. For technical details that are not described in detail in this embodiment, reference may be made to any of the above embodiments. This embodiment has the same beneficial effects as those obtained by the execution of the cell handover method.

An embodiment of the present disclosure provides a serving node. FIG. 8 is a schematic structural diagram of hardware of a serving node according to an embodiment. As shown in FIG. 8, the serving node provided in the embodiment of the present disclosure includes a memory 52, a processor 51, and a computer program stored in the memory and executable by the processor. The program, when executed by the processor 51, causes the processor 51 to implement the cell indication method described above.

The serving node may further include a memory 52. The number of processors 51 in the serving node may be one or more. In FIG. 8, one processor 51 is used as an example. The memory 52 is configured for storing one or more programs which, when executed by the one or more processors 51, cause the one or more processors 51 to implement the cell indication method according to the embodiments of the present disclosure.

The serving node further includes a communication apparatus 53, an input apparatus 54, and an output apparatus 55.

The processor 51, the memory 52, the communication apparatus 53, the input apparatus 54, and the output apparatus 55 in the serving node may be connected by a bus or in other ways. Connection by a bus is used as an example in FIG. 8.

The input apparatus 54 may be configured for receiving inputted numerical or character information, and generating a key signal input related to user settings and function control of the serving node. The output apparatus 55 may include a display device such as a display screen.

The communication apparatus 53 may include a receiver and a transmitter. The communication apparatus 53 is configured for sending and receiving information under the control of the processor 51.

The memory 52, as a computer-readable storage medium, may be configured for storing a software program, a computer-executable program, and modules, for example, program instructions/modules corresponding to the cell indication method in the embodiments of the present disclosure (for example, the generating module 310 and the sending module 320 in the cell indication apparatus). The memory 52 may include a program storage area and a data storage area. The program storage area may store an operating system, and an application required by at least one function. The data storage area may store data created according to the use of the serving node and the like. In addition, the memory 52 may include a high-speed random access memory, and may also include a nonvolatile memory, e.g., at least one magnetic disk storage device, flash memory device, or other nonvolatile solid-state storage device. In some examples, the memory 52 may further include memories located remotely from the processor 51, and the remote memories may be connected to the serving node via a network. Examples of the network include, but not limited to, the Internet, an intranet, a local area network, a mobile communication network, and combinations thereof.

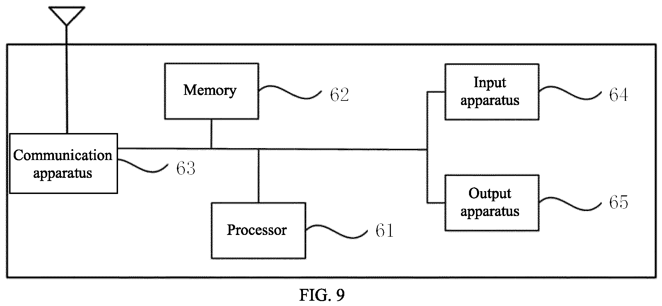

An embodiment of the present disclosure provides a terminal device. FIG. 9 is a schematic structural diagram of hardware of a terminal device according to an embodiment. As shown in FIG. 9, the terminal device provided by the present disclosure includes a memory 62, a processor 61, and a computer program stored in the memory and executable by the processor. The program, when executed by the processor 61, causes the processor 61 to implement the cell handover method described above.

The terminal device may further include a memory 62. The number of processors 61 in the terminal device may be one or more. In FIG. 9, one processor 61 is used as an example. The memory 62 is configured for storing one or more programs which, when executed by the one or more processors 61, cause the one or more processors 61 to implement the cell handover method according to the embodiments of the present disclosure.

The terminal device may further include a communication apparatus 63, an input apparatus 64, and an output apparatus 65.

The processor 61, the memory 62, the communication apparatus 63, the input apparatus 64, and the output apparatus 65 in the terminal device may be connected by a bus or in other ways. Connection by a bus is used as an example in FIG. 9.

The input apparatus 64 may be configured for receiving inputted numerical or character information, and generating a key signal input related to user settings and function control of the terminal device. The output apparatus 65 may include a display device such as a display screen.

The communication apparatus 63 may include a receiver and a transmitter. The communication apparatus 63 is configured for sending and receiving information under the control of the processor 61.

The memory 62, as a computer-readable storage medium, may be configured for storing a software program, a computer-executable program, and modules, for example, program instructions/modules corresponding to the cell handover method in the embodiments of the present disclosure (for example, the receiving module 410 and the handover module 420 in the cell handover apparatus). The memory 62 may include a program storage area and a data storage area. The program storage area may store an operating system, and an application required by at least one function. The data storage area may store data created according to the use of the terminal device and the like. In addition, the memory 62 may include a high-speed random access memory, and may also include a nonvolatile memory, e.g., at least one magnetic disk storage device, flash memory device, or other nonvolatile solid-state storage device. In some examples, the memory 62 may further include memories located remotely from the processor 61, and the remote memories may be connected to the terminal device via a network. Examples of the network include, but not limited to, the Internet, an intranet, a local area network, a mobile communication network, and combinations thereof.

An embodiment of the present disclosure further provides a storage medium, storing a computer program which, when executed by a processor, causes the processor to implement the cell indication method or the cell handover method according to any one of the embodiments of the present disclosure.

The cell indication method includes: generating DCI, where the DCI is used for indicating information of a target cell; and sending the DCI to a terminal device.

The cell handover method includes: receiving DCI, where the DCI is used for indicating information of a target cell; and performing a handover from a serving cell to the target cell according to the DCI.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an Erasable Programmable Read-Only Memory (EPROM), a flash memory, an optical fiber, a portable Compact Disc Read-Only Memory (CD-ROM), an optical storage device, a magnetic storage device, or any suitable combination thereof. The computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the operations of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

The above description is only several embodiments of the present disclosure, and is not intended to limit the scope of the present disclosure.

As will be understood by those having ordinary skills in the art, the term user terminal device encompasses any suitable type of wireless user equipment, such as a mobile telephone, portable data processing device, portable web browser or vehicle-mounted mobile station.

In general, the various embodiments of the present disclosure may be implemented in hardware or special purpose circuits, software, logic, or any combination thereof. For example, some aspects may be implemented in hardware, while other aspects may be implemented in firmware or software that can be executed by a controller, microprocessor or other computing device, but the present disclosure is not limited thereto.

The embodiments of the present disclosure may be implemented by the execution of computer program instructions by a data processor of a mobile device, for example, in a processor entity, or by hardware, or by a combination of software and hardware. The computer program instructions may be assembly instructions, Instruction Set Architecture (ISA) instructions, machine instructions, machine dependent instructions, microcode, firmware instructions, state setting data, or source code or object code written in any combination of one or more programming languages.

The block diagram of any logic flow in the accompanying drawings of the present disclosure may represent program steps, or may represent interconnected logic circuits, modules and functions, or may represent a combination of program steps and logic circuits, modules and functions. The computer program may be stored in a memory. The memory may be of any type suitable for the local technical environment and may be implemented using any suitable data storage technology, such as, but not limited to, a ROM, a RAM, and optical storage devices and systems (a Digital Video Disc (DVD) or a Compact Disk (CD)), etc. The computer-readable medium may include a non-transitory storage medium. The data processor may be of any type suitable for the local technical environment, such as, but not limited to, a general purpose computer, a special purpose computer, a microprocessor, a Digital Signal Processor (DSP), an Application Specific Integrated Circuit (ASIC), a programmable logic device (Field-Programmable Gate Array (FPGA)), and a processor based on a multi-core processor architecture.

The foregoing has provided a detailed description of several embodiments of the present disclosure by way of several non-limiting examples. However, various modifications and adjustments made to the above embodiments are obvious to those having ordinary skills in the art in light of the accompanying drawings and the claims, but do not depart from the scope of the present disclosure. Therefore, the proper scope of the present disclosure will be defined by the claims.

## Claims

1. A cell indication method, comprising:
generating Downlink Control Information (DCI), wherein the DCI is used for indicating information of a target cell; and
sending the DCI to a terminal device.

2. The method of claim 1, wherein the DCI is generated according to measurement information reported by the terminal device.

3. The method of claim 1, wherein the DCI comprises at least one of
a Radio Resource Control (RRC) message; Media Access Control Control Element (MAC-CE) information; or Physical Downlink Control Channel (PDCCH) DCI.

4. The method of claim 1, wherein the information of the target cell comprises at least one of
a Physical Cell Identifier (PCI) of the target cell; a Cell-Radio Network Temporary Identifier (C-RNTI) of the target cell; a target cell set; or an index of the target cell.

5. The method of claim 4, wherein the PCI comprises a PCI field value or a PCI index.

6. The method of claim 4, wherein the C-RNTI comprises a C-RNTI field value or a C-RNTI index.

7. The method of claim 4, wherein the target cell set is sent through an RRC message or a MAC CE message; and
the RRC message is an existing information element or a newly added information element.

8. The method of claim 3, wherein the PDCCH DCI is configured to have 1 bit, 2 bits, or 3 bits through higher layer, and is used for indicating an index of the target cell.

9. A cell handover method, comprising:
receiving Downlink Control Information (DCI), wherein the DCI is used for indicating information of a target cell; and
performing a handover from a serving cell to the target cell according to the DCI.

10. The method of claim 9, further comprising:
reporting measurement information, wherein the DCI is generated according to the measurement information.

11. The method of claim 9, wherein the DCI comprises at least one of:
a Radio Resource Control (RRC) message; Media Access Control Control Element (MAC-CE) information; or Physical Downlink Control Channel (PDCCH) DCI.

12. The method of claim 9, wherein the information of the target cell comprises at least one of
a Physical Cell Identifier (PCI) of the target cell; a Cell-Radio Network Temporary Identifier (C-RNTI) of the target cell; a target cell set; or an index of the target cell.

13. The method of claim 12, wherein the PCI comprises a PCI field value or a PCI index.

14. The method of claim 12, wherein the C-RNTI comprises a C-RNTI field value or a C-RNTI index.

15. The method of claim 12, wherein the target cell set is sent through an RRC message or a MAC CE message; and
the RRC message is an existing information element or a newly added information element.

16. The method of claim 11, wherein the PDCCH DCI is configured to have 1 bit, 2 bits, or 3 bits through higher layer, and is used for indicating an index of the target cell.

17. The method of claim 9, wherein performing a handover from a serving cell to the target cell according to the DCI comprises:
performing a handover from an uplink serving cell and a downlink serving cell to the target cell within a specified time according to the DCI; or
performing a handover from a downlink serving cell to the target cell within a specified time according to the DCI.

18. A cell indication apparatus, comprising:
a generating module, configured for generating Downlink Control Information (DCI), wherein the DCI is used for indicating information of a target cell; and
a sending module, configured for sending the DCI to a terminal device.

19. A cell handover apparatus, comprising:
a receiving module, configured for receiving Downlink Control Information (DCI), wherein the DCI is used for indicating information of a target cell; and
a handover module, configured for performing a handover from a serving cell to the target cell according to the DCI.

20. A serving node, comprising a memory, a processor, and a computer program stored in the memory and executable by the processor, wherein the computer program, when executed by the processor, causes the processor to carry out the cell indication method of any one of claims 1 to 8.

21. A terminal device, comprising a memory, a processor, and a computer program stored in the memory and executable by the processor, wherein the computer program, when executed by the processor, causes the processor to carry out the cell handover method of any one of claims 9 to 17.

22. A computer-readable storage medium, storing a computer program which, when executed by a processor, causes the processor to carry out the cell indication method of any one of claims 1 to 8 or the cell handover method of any one of claims 9 to 17.
